# EUROPÄISCHE PATENTANMELDUNG

(11) **EP 1 792 698 A2**
(43) Veröffentlichungstag der Anmeldung: **06.06.2007**
(21) Anmeldenummer: 06024842.4
(22) Anmeldetag: 30.11.2006
(51) Int. Cl.: B27N 3/00

(54) **Platte**

(30) Priorität: 30.11.2005 DE 102005057552
(71) Anmelder: DELCOTEX - Delius Conze & Colsmann Techtex GmbH & Co. KG, 33739 Bielefeld (DE)
(72) Erfinder: Hofmann, Mathias, 48369 Saebeck (DE)
(74) Vertreter: Wiebusch, Manfred

(57) **Zusammenfassung**

Platte mit mindestens einer Schicht (16) aus in Bindemittel gebundenen Partikeln (18), mit wenigstens einer Gittergewebematte (12) aus Natur- oder Kunstfasern, die flächig in das das Innere dieser Schicht (16) eingebettet ist.

## Beschreibung

Die Erfindung betrifft eine Platte mit mindestens einer Schicht aus in Bindemittel gebundenen Partikeln, insbesondere eine Spanplatte. MDF-Platte, HDF-Platte oder Hartfaserplatte mit Partikeln aus aus Holzspänen, Holzfasern oder sonstigen Naturfasermaterialien.

Derartige Platten sind in vielen verschiedenen Ausführungsformen bekannt. Sie werden beispielsweise verwendet für die Möbelindustrie, den Innenausbau und ähnliche Zwecke. Sie haben gegenüber Brettern aus Holz den Vorteil, daß sie sich, zumindest unter trockenen Verhältnissen, nicht wölben oder verziehen. Sie können im übrigen in relativ großen, fast beliebigen Flächen hergestellt werden, während Bretter aus Massivholz diese Möglichkeit nicht bieten.

Während vergleichbare Platten überwiegend als sogenannte Spanplatten aus Holzspänen oder -schnitzeln hergestellt wurden, sind vor einiger Zeit sogenannte MDF- und HDF-Platten hinzugekommen, die aus wesentlich feineren Holzpartikeln bestehen und in ihren Eigenschaften Massivholz relativ nahe kommen. Vergleichbare Platten, die gegebenenfalls zusätzliche Vorteile haben können, gibt es heute auch aus Hanf, Stroh oder anderen Naturprodukten, so daß insgesamt festzuhalten ist, daß die hier angesprochenen Platten weitgehend aus sogenannten nachwachsenen Rohstoffen bestehen können.

Während die hier besprochenen Platten eine relativ hohe Druckbelastbarkeit aufweisen, ist die Festigkeit in Biege- und Zugrichtung begrenzt.

Aus DE 1 653 161 A ist es bereits bekannt, in die Partikelschicht eine oder mehrere Armierungslagen aus einem organischen Textilgewebe einzubetten. Die Armierung kann dabei die Form von Streifen haben, die kreuzweise in der Schicht verlegt sind. Ein Problem besteht jedoch darin, daß die Armierung zugleich als Trennlage wirkt, die den Zusammenhalt der beiderseits der Armierung vorhanden Lagen der Partikelschicht schwächt, so daß die Platte bei Belastung dazu neigt, in der Ebene der Armierung aufzuspalten. Wenn die Armierung aus Gründen der Biegefestigkeit außermittig, also außerhalb der neutralen Faser in der Partikelschicht angeordnet ist, besteht außerdem daß Problem, daß sich das Muster der Armierungsstreifen an der Oberfläche der Platte abzeichnet, vor allem dann, wenn die Oberflächenschicht der Platte aus relativ feinkörnigen Partikeln besteht.

Der Erfindung liegt die Aufgabe zugrunde, eine Platte der eingangs genannten Art zu schaffen, deren mechanische Eigenschaften, insbesondere bei Biege- und Zugbelastung, gegenüber herkömmlichen Platten weiter verbessert sind.

Zur Lösung dieser Aufgabe ist die erfindungsgemäße Platte gekennzeichnet durch wenigstens eine Gittergewebematte aus Natur- oder Kunstfasern, die flächig in das das Innere der Schicht eingebettet ist.

Unter einem Gittergewebe versteht man ein Textilmaterial aus Kett- und Schußfäden, die gemäß einer in der Webtechnik bekannten Bindungsart miteinander verwebt sind, bei denen jedoch zwischen den einzelnen Kettfäden oder jeweils zwischen Gruppen aus mehreren Kettfäden sowie zwischen den einzelnen Schußfäden oder jeweils zwischen Gruppen aus mehreren Schußfäden größere Zwischenräume bestehen, so daß das Material insgesamt eine Gitterstruktur aufweist.

Die Gittergewebematte wirkt innerhalb des Spänekorpus etwa wie eine Bewehrung innerhalb einer Betonkonstruktion. Sie gestattet nicht nur die Aufnahme von Zugkräften, sondern aufgrund der Textilbindung auch eine bessere Aufnahme von Scherkräften und führt daher dazu, daß die Platte stabiler, insbesondere zug- und biegefester wird. Andererseits lassen sich die Fasern bzw. Fasergruppen der Gittergewebematte so dünn gestalten, daß sie sich nicht an der Oberfläche abzeichnen, wenn sie nur von einer relativ dünnen Lage der Partikelschicht überdeckt sind. Vor allem aber ermöglichen es die Gitteröffnungen der Matte, daß das Bindemittel und auch zumindest die kleineren der Partikel (z. B. Späne oder Faserstücke) die Gittergewebematte durchdringen können und für eine feste Verzahnung der beiden Lagen der Partikelschicht miteinander und mit der Matte sorgen. Auf diese Weise läßt sich eine Aufspaltung der Platte wirksam verhindern.

Vorteilhafte Ausgestaltungen der Erfindung sind in den Unteransprüchen angegeben.

Die Gittergewebematte kann aus beliebigen Kunstfasern oder natürlichen Fasern bestehen. In Betracht kommen beispielsweise Fasern aus Baumwolle, Wolle, Sisalfasern, Jute und allen geeigneten, spinnbaren Kunststofffasern. Im Hinblick auf eine spätere sortenreine Entsorgung der Platte sind Fasern aus Naturstoffen oder naturidentischen Stoffen, insbesondere Viskosefasern bevorzugt.

Das Gittergewebe kann nach der Herstellung mit einem geeigneten polymeren Kunststoffmaterial getränkt oder beschichtet und/oder durch eine spezielle Bindungstechnik schiebefixiert werden.

Wenn die Fasern oder Faserbündel mit einem Bindemittel, etwa dem polymeren Kunststoffmaterial getränkt oder umhüllt sind, um die Gittermatte zu verfestigen, kann anstelle des Gittergewebes auch ein Gittergelege verwendet werden, also ein Textilmaterial, bei dem die in unterschiedlichen Richtungen verlaufenden Fasern nicht verwebt, sondern einfach aufeinander gelegt sind. Die Fixierung wird dann allein durch das Bindemittel bewirkt.

Die Position des Gittergewebes oder -geleges in der Partikelschicht der Platte ist grundsätzlich beliebig, solange von der Außenseite her eine ausreichende Überdeckung durch das Plattenmaterial gewährleistet ist. Wie im Stahlbetonbau kann das Gittergewebe auf derjenigen Seite einer Platte eingebettet sein, die in höherem Maße Zugkräften ausgesetzt ist. Es können auch mehrere Matten parallel zueinander in eine Platte eingebettet sein.

Spanplatten weisen häufig eine einheitliche Schicht aus Spänen und Bindemittel auf, jedoch mit einer inhomogenen Größenverteilung der Späne: in einer Kernlage dominieren gröbere Späne, während Decklagen auf beiden Seiten der Kernlage vorwiegend aus feineren Spänen bestehen. In dem Fall ist die Gittermatte vorzugsweise zwischen der Kernlage und mindestens einer der Decklagen angeordnet, und die Maschenweite des Gittergewebes oder - gelges sollte zumindest größer sein als die mittlere Größe der Späne in der Decklage.

Die Erfindung ist nicht nur auf Spanplatten und ähnliche Platten anwendbar, sondern auch auf mehrlagige Plattenkonstruktionen, wie etwa Türblätter mit eingefügter Zwischenlage in Form einer Bienenwabenkonstruktion aus Pappe oder Kunststoff, Stegplatten, Doppelstegplatten, Tischplatten usw.

Im folgenden werden bevorzugte Ausführungsbeispiele der Erfindung anhand der beigefügten Zeichnungen näher erläutert.
- Fig. 1: ist eine perspektivische Darstellung und zeigt ein vorbereitetes Spänebett sowie einen Zuschnitt einer Gittergewebematte, die auf das Spänebett aufgelegt und durch nicht gezeigte weitere Späne überdeckt wird;
- Fig. 2: ist ein Querschnitt durch eine Platte mit eingebettetem Gittergewebe;
- Fig. 3: zeigt einen schematischen Schnitt durch eine Platte gemäß einem anderen Ausführungsbeispiel;
- Fig. 4 und 5: sind schematische vergrößerte Darstellungen von Gittergeweben in unterschiedlichen Ausführungsformen; und
- Fig. 6: eine schematische Darstellung eines Gittergeleges.

Spanplatten oder ähnliche Platten werden dadurch hergestellt, daß eine Lage aus Spänen gebildet wird, daß ein Bindemittel zugegeben wird und daß die Spänelage anschließend unter Anwendung von Hitze und Druck gepreßt wird. Dies geschieht auch bei der Herstellung der erfindungsgemäßen Platten, jedoch erfolgt hier die Auslegung der Späne zweistufig. Zunächst wird der eine, untere Späneanteil ausgestreut, anschließend wird eine Gittergewebematte auf die Späne aufgelegt und schließlich wird die restliche Späneschicht auf die Gittergewebematte gestreut. Abgesehen von dieser Unterbrechung der Späneansammlung ist eine Abweichung von dem üblichen Verfahren der Herstellung von Spanplatten nicht vorgesehen. Die einzelnen Schritte können unmittelbar ineinandergreifen. Es können auch die üblichen Binde- und Klebemittel (z. B. auf Melaminharzbasis) verwendet werden, und auch die üblichen Pressen kommen für das Verpressen der erfindungsgemäßen Platte in Betracht.

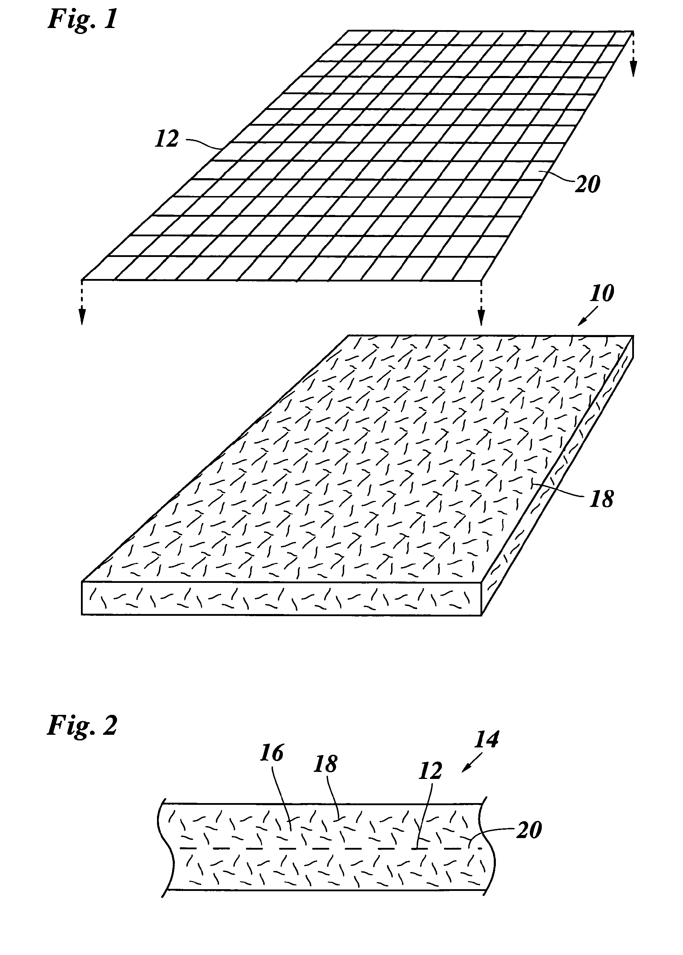

In Fig. 1 ist ein Spänebett mit 10 und eine Gittergewebematte mit 12 bezeichnet. Die Gittergewebematte 12 wird auf das Spänebett aufgelegt, bevor eine weitere Lage aus Spänen und Bindemittel aufgebracht wird.

Fig. 2 zeigt einen schematischen Teilquerschnitt durch eine erfindungsgemäße Platte 14. Die Platte weist eine Schicht 16 aus in einem Bindemittel gebundenen Spänen 18 auf. In halber Höhe der Schicht 16 ist die Gittergewebematte 12 eingebettet.

Die Gittergewebematte 12 weist Gitteröffnungen 20 auf. Die Größe dieser Gitteröffnungen 20, d.h., die Maschenweite des Gittergewebes, liegt etwa in der gleichen Größenordnung wie die Partikelgröße der Späne 18. Im allgemeinen werden die Spänepartikel unterschiedliche Größen haben, so daß zumindest einige dieser Partikel kleiner sind als die Maschenweite des Gitters und folglich durch die Gittermaschen hindurchdringen können, so daß die oberhalb und unterhalb der Gittergewebematte 12 gebildeten Lagen der Schicht 16 fest miteinander verzahnt werden, zumal auch das Bindemittel ungehindert durch die verhältnismäßig großen Gitteröffnungen hindurchdringen kann.

Im Fall einer Spanplatte beträgt die Maschenweite des Gittergewebes je nach Größe der Späne etwa 5 bis 12 mm. Im Fall einer MDF-Platte, die anstelle der Spänepartikel wesentlich feinere Faserstücke enthält, kann die Maschenweite des Gittergewebes entsprechend kleiner sein und beispielsweise nur 0,5 bis 2 mm betragen.

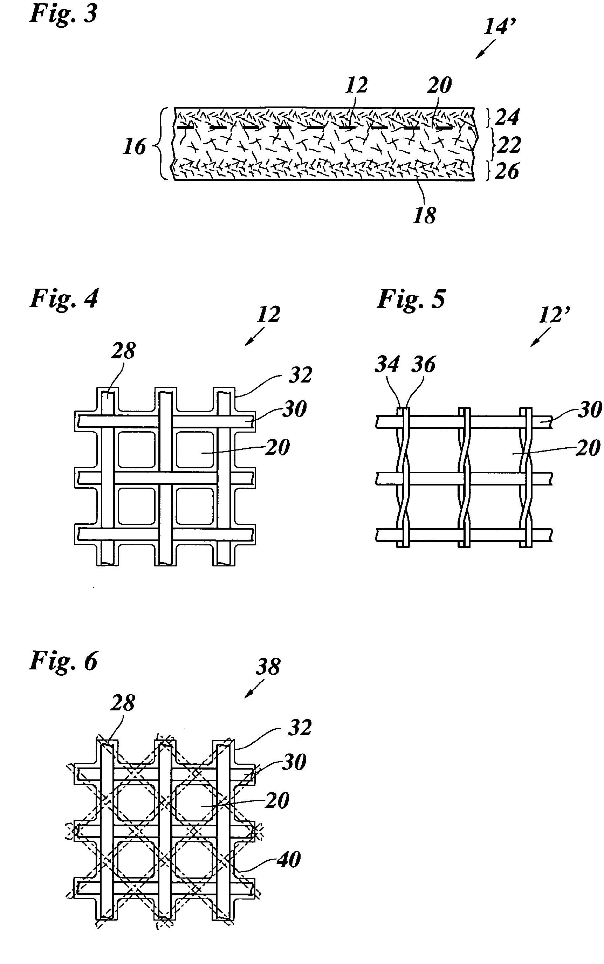

Figur 3 zeigt als weiteres Ausführungsbeispiel der Erfindung eine Spanplatte 14', bei der das Bindemittel und die Späne 18 zwar ebenfalls eine einheitliche Schicht 16 bilden, jedoch mit einer über die Dicke der Platte ungleichförmigen Größenverteilung der Späne. In einer Kernlage 22 sind gröbere Spänepartikel vorherrschend, während in oberen und unteren Decklagen 24, 26 feinere Partikel dominieren. Die Gittergewebematte 12 ist in diesem Beispiel gegenüber der Mitte der Platte 14' versetzt und im Übergangsbereich zwischen der Kernlage 22 und der oberen Decklage 24 eingebettet. Die Gitteröffnungen 20 sind zumindest größer als die mittlere Größe der Späne 18 in der Decklage 24. Auf diese Weise wird nicht nur eine gute Verzahnung zwischen der Decklage 24 und der Kernlage 22 beim Pressen der Platte erreicht, sondern zugleich auch sichergestellt, daß die feinen Späne 18 der Decklage die Gitteröffnungen 20 im wesentlichen ausfüllen, so daß die Decklage eine ebene äußere Oberfläche bildet, in der sich schon bei relativ geringer Schichtdicke der Decklage 24 die Gitterstruktur der Gittergewebematte 12 nicht mehr abzeichnet. So kann die Spanplatte 14' beispielsweise ein- oder beidseitig beschichtet oder lackiert werden und dann als dekoratives Element im Möbelbau eingesetzt werden. Selbst bei Betrachtung im Gegenlicht sind dann an der Oberfläche der Decklage 24 keine Markierungen mehr erkennbar, die das Vorhandensein der Gittergewebematte 12 erahnen lassen.

Figur 4 zeigt einen vergrößerten Ausschnitt der Gittergewebematte 12 und läßt einzelne Kettfäden 28 und Schußfäden 30 sowie deren Bindung (im gezeigten Beispiel eine Leinenbindung) erkennen. Anstelle der Kettfäden 28 und Schußfäden 30 können jeweils auch Bündel aus mehreren Fäden oder Gruppen von jeweils eng beianderliegenden Kett- und Schußfäden mit Leinenbindung vorgesehen sein. Wesentlich ist, daß zwischen den einzelnen Fäden, Fadenbündeln bzw. -gruppen die Gitteröffnungen 20 gebildet werden.

Um eine bessere Schiebefixierung der Kett- und Schußfäden zu erreichen, ist die Gittergewebematte 12 im gezeigten Beispiel mit einem Kunststoffpolymer 32 getränkt, das die einzelnen Fäden bzw. Fadenbündel oder -gruppen umhüllt, jedoch die Gitteröffnungen 20 offen läßt. Bei dem Kunststoffpolymer 32 handelt es sich vorzugsweise um ein Material, das, allenfalls abgesehen von geringfügigen chemischen Modifikationen, mit dem Bindemittel in der Schicht 16 identisch ist, so daß die Gittergewebematte 12 spätestens beim Pressen der Platte fest in die Schicht 16 integriert wird. Zugleich hat dies den Vorteil, daß bei einer späteren Entsorgung der Platte nicht auf etwaige Materialunterschiede zwischen dem Bindemittel und dem Kunststoffpolymer der Gittergewebematte Rücksicht genommen zu werden braucht.

Wenn die Späne der Platte 18 aus Naturstoffen, beispielsweise aus Holz bestehen, sollten auch die Fasern der Kettfäden 28 und der Schußfäden 30 aus Naturstoffen oder zumindest naturidentischen Stoffen wie beispielsweise Viskose bestehen.

Figur 5 zeigt einen Ausschnitt einer Gittergewebematte 12' gemäß einem anderen Ausführungsbeispiel. Hier werden die Gitteröffnungen 20 jeweils durch Paare von Kettfäden 34, 36 begrenzt, die jeweils zwischen den Schußfäden 30 oder Schußfadenbündeln umeinander verdrillt sind. Auf diese Weise wird eine Schiebefixierung der Gittergewebematte ggf. auch ohne Umhüllung mit dem Kunststoffpolymer 32 erreicht.

Anstelle der Gittergewebematte 12 nach Fig. 4 kann wahlweise auch eine Gittergelegematte 38 verwendet werden, wie sie in Fig. 6 gezeigt ist. Hier sind die Fäden oder Fadenbündel 28, 30 nicht verwebt, sonderen in verschiedenen Ebenen übereinander gelegt, und die Matte wird nur durch das Kunststoffpolymer 32 verfestigt. Die Fäden 28, 30 bilden ein biaxiales Gelege. Wahlweise kann jedoch durch zusätzliche Fäden 40 oder Fadenbündel auch ein tri- oder multiaxiales Gelege gebildet werden, bei dem durch die längs einer oder beiden Diagonalen verlaufenden Fäden 40 eine noch größere Zugfestigkeit erreicht wird. Die Fäden 40 sollten dabei so gelegt werden, daß hinreichend große Gitteröffnungen 20 verbleiben.

Wenn mehrere Matten in die Schicht 16 eingebettet werden, sind selbstverständlich auch Kombinationen von Gittergewebematten und Gittergelegematten möglich.

Gittergewebematten und Gittergelegematten der hier beschriebenen Art sind als industriell gefertigte Endlosware verfügbar, so daß eine rationelle Fertigung der Platten ermöglicht wird.

## Patentansprüche

1. Platte mit mindestens einer Schicht (16) aus in Bindemittel gebundenen Partikeln (18), **gekennzeichnet durch** wenigstens eine Gittergewebematte (12) aus Natur- oder Kunstfasern, die flächig in das das Innere dieser Schicht (16) eingebettet ist.

2. Platte nach Anspruch 1, bei der die mittlere Größe der die Schicht (16) bildenden Partikel (18) zumindest in der auf einer Seite der Gittergewebematte (12) liegenden Lage (24) der Schicht (16) kleiner ist als die Maschenweite (20) der Gittergewebematte.

3. Platte nach Anspruch 2, bei der die Maschenweite der Gittergewebematte zwischen 1,0 und 12 mm beträgt.

4. Platte nach einem der vorstehenden Ansprüche, bei der die Gittergewebematte (12) außermittig in die Schicht (16) eingebettet ist.

5. Platte nach einem der vorstehenden Ansprüche, bei der die die mittlere Größe der Partikel (18) in der Schicht (16) in einer Lage (24) auf einer Seite der Gittergewebematte (12) größer ist als in einer Lage (22) auf der anderen Seite.

6. Platte nach einem der vorstehenden Ansprüche, bei der die Gittergewebematte (12) und die Partikel (18) der Schicht (16) aus Naturstoffen oder naturidentischen Stoffen bestehen.

7. Platte nach Anspruch 6, bei der die Gittergewebematte (12) aus Viskosefasern besteht.

8. Platte nach einem der vorstehenden Ansprüche, bei der die Gittergewebematte (12) mit einem Kunststoffpolymer (32) getränkt oder beschichtet ist.

9. Platte nach Anspruch 8, bei der das Kunststoffpolymer (32) im wesentlichen mit dem Bindemittel in der Schicht (16) identisch ist.

10. Platte nach einem der vorstehenden Ansprüche, bei der die Gittergewebematte (12) durch Verdrehung von jeweils wenigstens zwei Kettfäden (34, 36) zwischen einzelnen Schußfäden (30) oder Gruppen von Schußfäden schiebefixiert ist.

11. Platte mit mindestens einer Schicht (16) aus in Bindemittel gebundenen Partikeln (18), **gekennzeichnet durch** wenigstens eine Gittergelegematte (38) aus Natur- oder Kunstfasern, die **durch** Tänkung oder Umhüllung der Fasern mit einem Bindemittel (32) verfestigt und flächig in das das Innere der Schicht (16) eingebettet ist.
